(19) Europäisches Patentamt / European Patent Office / Office européen des brevets

(11) **EP 4 062 124 B1**

(12) **EUROPÄISCHE PATENTSCHRIFT**

(45) Veröffentlichungstag und Bekanntmachung des Hinweises auf die Patenterteilung:
**09.10.2024   Patentblatt 2024/41**

(21) Anmeldenummer: **20810869.6**

(22) Anmeldetag: **10.11.2020**

(51) Internationale Patentklassifikation (IPC):
**G01B 5/00** *(2006.01)*      **B23Q 11/00** *(2006.01)*

(52) Gemeinsame Patentklassifikation (CPC):
**G01B 5/0014; B23Q 11/0007; B23Q 1/70**

(86) Internationale Anmeldenummer:
**PCT/EP2020/000189**

(87) Internationale Veröffentlichungsnummer:
**WO 2021/098978 (27.05.2021 Gazette 2021/21)**

(54) **VERFAHREN ZUR ERFASSUNG EINER AXIALEN VERLÄNGERUNG EINER ROTIERENDEN WELLE RELATIV ZU EINEM GEHÄUSE**

METHOD FOR DETECTING AN AXIAL EXTENSION OF A ROTATING SHAFT RELATIVE TO A HOUSING

PROCÉDÉ DE DÉTECTION D'UN ALLONGEMENT AXIAL D'UN ARBRE EN ROTATION PAR RAPPORT À UN CARTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2019   DE 102019008025**

(43) Veröffentlichungstag der Anmeldung:
**28.09.2022   Patentblatt 2022/39**

(73) Patentinhaber: **Rheinisch-Westfälische Technische Hochschule (RWTH) Aachen 52062 Aachen (DE)**

(72) Erfinder:
• **FEY, Marcel**
  **52249 Eschweiler (DE)**
• **BRECHER, Christian**
  **52074 Aachen (DE)**
• **ECKEL, Hans-Martin**
  **52072 Aachen (DE)**
• **STRACHKOV, Anton**
  **52074 Aachen (DE)**

(74) Vertreter: **Kohl, Karl-Heinz Jackisch-Kohl und Kohl Stuttgarter Straße 115 70469 Stuttgart (DE)**

(56) Entgegenhaltungen:
**DE-B3- 10 329 590      JP-A- 2001 269 828
JP-A- 2006 316 959      US-A1- 2009 009 018**

**Beschreibung**

Die Erfindung betrifft ein Verfahren zur Erfassung einer axialen Verlängerung einer rotierenden Welle relativ zu einem Gehäuse nach dem Oberbegriff des Anspruches 1.

Für verschiedenste Anwendungen ist die messtechnische Erfassung der radialen und axialen Verlagerungen einer rotierenden Welle relativ zu ihrem Gehäuse von großem Interesse. Die Messungen erfolgen in der Regel mit berührungslos arbeitenden, radial und axial angeordneten Sensoren. Aufgrund der mit diesen Sensoren erfassten radialen und axialen Verlagerungen der Welle können zum Beispiel externe Lasten, die auf die Welle und deren Lagerstellen wirken, berechnet, Informationen für das Wuchten von Werkzeugen, die mit der Welle angetrieben werden, gesammelt oder eine Prozessüberwachung umgesetzt werden.

Voraussetzung für diese Anwendungsszenarien ist, dass die Sensorsignale von mechanischen, kinematischen und thermisch bedingten Störeinflüssen bereinigt werden, welche die messtechnische Erfassung beeinträchtigen würden.

Der Rund- und Planlauf der Messflächen als mechanische Messfehler können für jeden Sensor ermittelt und im Betrieb mit bekannter Winkellage der Welle (z.B. über Drehgeber oder geeignete Verfahren) korrigiert werden.

Die axiale, drehzahlabhängige Verlagerung der Welle infolge kinematischer Effekte in der Spindellagerung und die drehzahlabhängige fliehkraftbedingte radiale Aufweitung können durch geeignete Korrekturtabellen korrigiert werden.

Am Beispiel der Fräsbearbeitung wirken durch die hochdynamische Positionierung der Spindel Trägheitskräfte auf die Welle. Dadurch treten axiale und radiale trägheitsbedingte Verlagerungen auf. Beispielsweise können diese mit Hilfe von gemessenen Beschleunigungen und geeignetem Korrekturmodell korrigiert werden.

Die Korrektur der radialen und axialen thermischen Dehnung der Welle und des Gehäuses gestaltet sich unter dem gleichzeitigen Einfluss lastbedingter Verlagerungen jedoch schwierig.

Zur Erfassung der radialen Verlagerung der Welle relativ zum Gehäuse, korrigiert um die summierte thermische Aufweitung zwischen dem Gehäuse und der Welle, ist es bekannt, Sensoren in beliebiger radialer Anordnung einzusetzen. Im einfachsten Falle werden zwei um 180° versetzt zueinander angeordnete radiale Sensoren herangezogen. Unter der Annahme, dass sich die Welle und das Gehäuse gleichmäßig radial thermisch aufweiten, kann mit den einander gegenüberliegenden Sensoren die summierte radiale Aufweitung aus Welle und Gehäuse berechnet werden. Werden zusätzlich die Sensorsignale zweier um 90° versetzt zueinander liegender Sensoren herangezogen und um die radiale Aufweitung korrigiert, kann zum Beispiel eine gleichzeitig auftretende lastbedingte Verlagerung der Welle in zwei radialen Richtungen gemessen werden.

Thermisch bedingte axiale Verlagerungen der Welle und/oder des Gehäuses müssen allerdings ebenfalls als Störfaktoren berücksichtigt werden.

Im Stand der Technik offenbaren JP 2006 316959 A, JP 2001 269828 A und US 2009/009018 A Magnetlagereinheiten. DE 103 29 590 offenbart eine Werkzeugmaschinenpinole.

Der Erfindung liegt die Aufgabe zugrunde, das gattungsgemäße Verfahren so auszubilden, dass eine thermisch bedingte relative axiale Verlagerung zwischen der Welle und dem Gehäuse isoliert von ggf. überlagerten lastbedingten axialen Verlagerungen einfach und zuverlässig erfasst werden kann.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird die axiale thermische Dehnung der Welle mittels einer Kenngröße, die beispielsweise eine berechnete Temperatur sein kann, berechnet. Weiterhin wird die axiale thermische Dehnung des Gehäuses mittels einer gemessenen Temperatur berechnet, die über einen geeignet angebrachten Temperatursensor gemessen wird. Außerdem wird die gesamte axiale Verlagerung zwischen der Welle und dem Gehäuse mittels wenigstens eines axialen Sensors erfasst. Durch die Kenngröße kann der Einfluss der thermischen Dehnung der Welle und durch den am Gehäuse geeignet angebrachten Temperatursensor der Einfluss der thermischen Dehnung des Gehäuses auf die gemessene gesamte axiale Verlagerung erfasst werden. Ggf. gleichzeitig auftretende lastbedingte Verlagerungen können so isoliert identifiziert werden.

Vorteilhaft werden zur Bestimmung der Kenngröße, die zur Berechnung der axialen thermischen Dehnung der Welle herangezogen wird, die summierte radiale Aufweitung $\Delta R_{sum}$ der Welle und des Gehäuses gemessen. Dies kann beispielsweise in einfacher Weise durch mindestens zwei gegenüberliegende radial angeordnete Verlagerungssensoren erfolgen.

Die summierte radiale Aufweitung kann unabhängig von eventuell auftretenden lastbedingten Verlagerungen nach der Beziehung

$$\Delta R_{sum} = (\Delta_{Sensor\ 0°} + \Delta_{Sensor\ 180°})\,/2$$

berechnet werden,

mit

$\Delta_{Sensor\ 0°}$ - Messwert bei 0° radialem Winkel

$\Delta_{Sensor\ 180°}$ - Messwert bei 180° radialem Winkel

$\Delta R_{sum}$ ist hierbei die Differenz der radialen Aufweitungen des Gehäuses und der Welle.

Die radiale Aufweitung des Gehäuses kann aufgrund einer inhomogenen Temperaturverteilung gegebenenfalls ungleichmäßig sein. Daher ist es vorteilhaft, mehrere Sensoren einzusetzen und die Temperatur an jedem Sensor zu messen. Dadurch kann die radiale Aufweitung des Gehäuses an jedem Sensor einzeln erfasst werden.

Die summierte radiale Aufweitung wird in vorteilhafter Ausbildung zur Verbesserung des Messergebnisses um eine fliehkraftbedingte drehzahlabhängige radiale Aufweitung eines Messtargets bereinigt. Diese Bereinigung kann beispielsweise mittels eines Kennfeldes erfolgen.

Bei einer vorteilhaften Ausführung ist die Korrektur eventuell auftretender trägheitsbedingter Verlagerungen der Welle notwendig. Diese Korrektur ist durch den Einsatz von einem in dem Gehäuse positionierten Beschleunigungssensor je Achsrichtung möglich. Alternativ kann diese Korrektur auf Basis der steuerungsinternen Informationen über die Achsbeschleunigungen (bei der dynamischen Positionierung einer Spindel) erfolgen.

Das Messtarget kann vorteilhaft an der Welle vorgesehen sein.

Bei einer weiteren vorteilhaften Ausbildung kann der Wert $\Delta R_{sum}$ um eine thermisch bedingte radiale Aufweitung des Gehäuses bereinigt werden. Hierfür ist am Gehäuse vorteilhaft mindestens ein geeignet positionierter Temperatursensor vorgesehen, auf dessen Grundlage die radiale thermisch bedingte Aufweitung des Gehäuses berechnet wird.

Vorteilhaft wird zur Bestimmung der rein thermisch bedingten radialen Aufweitung der Welle die Differenz aus der radialen thermischen Aufweitung des Gehäuses und der gemessenen summierten radialen fliehkraftbereinigten Aufweitung gebildet. Auf der Grundlage der rein thermisch bedingten radialen Aufweitung der Welle wird die Änderung der Wellentemperatur berechnet.

Diese stellt den oben beschriebenen Kennwert dar.

Mittels der so bekannten Wellentemperatur lässt sich die thermisch bedingte axiale Dehnung der Welle berechnen.

Die Temperaturänderung des Gehäuses, auf deren Grundlage die axiale thermisch bedingte Dehnung des Gehäuses berechnet werden kann, wird mit einem geeignet positionierten Temperatursensor gemessen.

Die Differenz der oben beschriebenen thermisch bedingten axialen Dehnung des Gehäuses und der Welle bildet die thermisch bedingte relative Verlagerung.

Vorteilhaft wird zur Bestimmung der gesamten axialen Verlagerung zwischen dem Gehäuse und der Welle wenigstens ein axialer Sensor und wenigstens ein Messtarget eingesetzt. Der axiale Sensor ist am Gehäuse und das Messtarget an der Welle vorgesehen. Der axiale Sensor und das Messtarget liegen mit axialem Abstand einander gegenüber. Mit Hilfe des axialen Sensors und des Messtargets kann die gesamte relative axiale Verlagerung zwischen dem Gehäuse und der Welle einfach erfasst werden.

Die oben beschriebene thermisch bedingte axiale relative Verlagerung wird von der gemessenen axialen Gesamtverlagerung subtrahiert. Die so korrigierte gemessene Gesamtverlagerung ist dann die um den thermischen Anteil korrigierte Verlagerung der rotierenden Welle relativ zum Gehäuse.

Eventuell auftretende lastbedingte axiale Verlagerungen können somit isoliert gemessen werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispiels näher erläutert. Es zeigen

Fig. 1    in Stirnansicht eine in einem Gehäuse drehbar gelagerte Welle mit einem Messtarget sowie axialen und radialen Sensoren,

Fig. 2    einen Axialschnitt durch das Gehäuse gemäß Fig. 1, in dem die Welle drehbar gelagert ist,

Fig. 3    die gemessene Temperaturdifferenz am Gehäuse und die daraus bestimmte thermische radiale Aufweitung des Gehäuses sowie die radiale thermische Aufweitung des Messtargets auf der Welle und die berechnete Wellentemperatur,

Fig. 4    die gemessene Temperaturdifferenz am Gehäuse und die daraus bestimmte thermische axiale Dehnung des Gehäuses sowie die axiale thermische Dehnung der Welle mit dem Messtarget auf Basis der berechneten Wellentemperatur,

Fig. 5    ein Vergleich der gemessenen relativen axialen Verlagerung der Welle und des Gehäuses und der um die thermischen Effekte korrigierten relativen axialen Verlagerung.

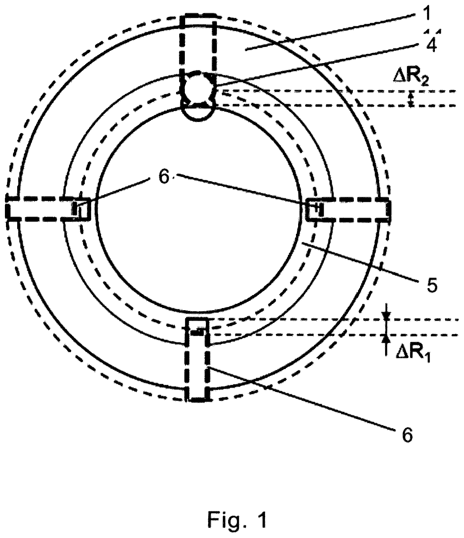

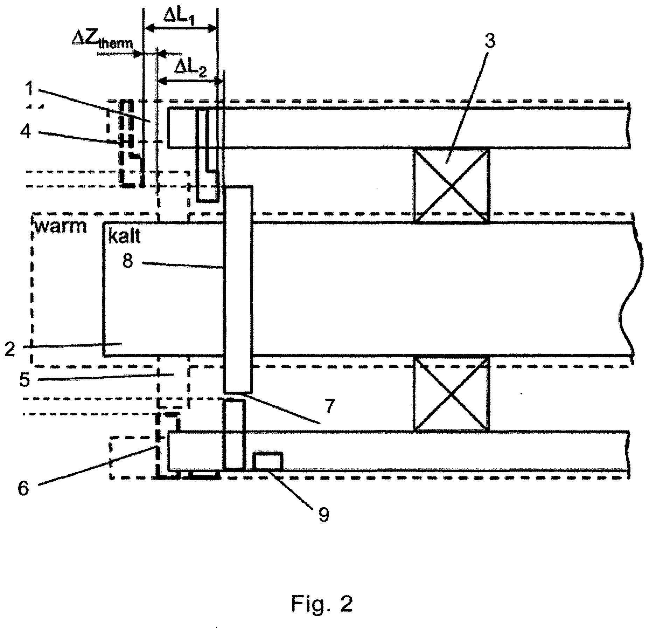

Die Fig. 1 und 2 zeigen ein Gehäuse 1, in dem eine Welle 2 drehbar gelagert ist. Im Gehäuse 1 befindet sich wenigstens ein Lager 3, mit dem die Welle 2 drehbar abgestützt ist. Das Lager 3 bildet ein Festlager. Das Gehäuse 1 kann ein Spindelgehäuse und die Welle 2 eine Spindel sein.

Die Welle 2 wird in bekannter Weise mittels eines (nicht dargestellten) Antriebes rotatorisch angetrieben.

Für verschiedenste Anwendungen ist die messtechnische Erfassung der radialen und axialen Verlagerungen der rotierenden Welle 2 relativ zu ihrem Gehäuse 1 von großem Interesse. Basierend auf solchen gemessenen Verlagerungen können zum Beispiel externe Lasten, die auf die Welle 2 und deren Lagerstellen 3 wirken, berechnet, Informationen zum Auswuchten von Werkzeugen gesammelt oder eine Prozessüberwachung eingesetzt werden.

Um diese messtechnische Erfassung zuverlässig zu gewährleisten, müssen mechanisch, kinematisch und thermisch bedingte Störeinflüsse herausgefiltert werden.

Nachfolgend wird ein Verfahren beschrieben, mit dem thermisch bedingte Verlagerungen in axialer und radialer Richtung zuverlässig erfasst werden können.

In den Fig. 1 und 2 ist mit ausgezogenen Linien die Lage des Gehäuses 1 und der Welle 2 dargestellt, wenn eine Verlagerung noch nicht erfolgt ist. Mit den gestrichelten Linien ist die Lage von Gehäuse 1 und Welle 2 angegeben, wenn beide thermisch bedingte radiale Aufweitungen und axiale Dehnungen aufweisen.

Im Gehäuse 1 befindet sich wenigstens ein axial arbeitender Verlagerungssensor 4. Er ist beispielhaft nahe der Stirnseite des Gehäuses 1 angeordnet. Solche axialen Sensoren 4 sind bekannt und werden darum nicht näher beschrieben. Beispielhaft können solche axialen Sensoren 4 durch Wirbelstromsensoren gebildet sein.

Der axiale Sensor 4 wirkt messtechnisch mit einem Messtarget 5 zusammen, das drehfest und axial unverschieblich auf der Welle 2 vorgesehen ist. Das Messtarget 5 ist beispielhaft ein Stahlring, der radial über den Umfang der Welle 2 vorsteht und vom Gehäuse 1 mit radialem Abstand umgeben wird.

Wie Fig. 2 zeigt, befindet sich das Messtarget 5 beispielhaft im Bereich zwischen dem axialen Sensor 4 und dem Lager 3. Das Messtarget 5 liegt mit seiner Stirnfläche 8 mit geringem axialem Abstand dem axialen Sensor 4 gegenüber.

Mit Hilfe des Messtargets 5 und des axialen Sensors 4 lässt sich die relative axiale Verlagerung $Z_{mess}$ zwischen dem Gehäuse 1 und der Welle 2 messtechnisch zuverlässig erfassen.

Relative radiale Verlagerungen zwischen dem Gehäuse 1 und der Welle 2 werden durch radial arbeitende Sensoren 6 erfasst. Sie sind am Gehäuse 1 vorgesehen und so angeordnet, dass sie der Umfangsfläche 7 des Messtargets 5 mit geringem radialem Abstand gegenüberliegen.

Um die radialen Verlagerungen zuverlässig feststellen zu können, sind über den Umfang verteilt mehrere Sensoren 6 vorgesehen. Im Ausführungsbeispiel sind beispielhaft drei radiale Sensoren 6 vorgesehen, die in Winkelabständen von 90° zueinander angeordnet sind.

Die Sensoren 4, 6 sind an eine (nicht dargestellte) Auswerteeinheit angeschlossen, welche die Sensorsignale entsprechend auswertet.

Durch thermische Einflüsse können das Gehäuse 1 und die Welle 2 radial aufgeweitet werden, was in den Fig. 1 und 2 durch die gestrichelten Linien angegeben ist. Unter der Annahme, dass sich die Welle 2 und das Gehäuse 1 jeweils gleichmäßig radial thermisch aufweiten, kann mit zwei diagonal einander gegenüberliegenden Sensoren 6 (Sensor 0° und Sensor 180°) die summierte radiale Aufweitung $\Delta R_{sum}$ aus Gehäuse 1 und Welle 2 berechnet werden.

Die summierte radiale Aufweitung kann unabhängig von eventuell auftretenden lastbedingten Verlagerungen nach der Beziehung

$$\Delta R_{sum} = (\Delta_{Sensor\ 0°} + \Delta_{Sensor\ 180°}) / 2$$

berechnet werden.

Hierbei bedeuten

$\Delta_{Sensor\ 0°}$    Messwert bei 0° radialem Winkel

$\Delta_{Sensor\ 180°}$    Messwert bei 180° radialem Winkel

Hierfür zwei Beispiele

In einem ersten Fall findet eine lastbedingte Verlagerung der Welle 2 um 2μm statt. Dann ist

$$\Delta_{\text{Sensor }0°} = + 2\mu m$$

$$\Delta_{\text{Sensor }180°} = - 2\mu m$$

Damit ergibt sich die summierte radiale Aufweitung der Welle 2

$$\Delta R_{\text{sum}} = (2\mu m - 2\mu m) / 2 = 0$$

In einem zweiten Fall findet eine lastbedingte Verlagerung der Welle 2 um 2μm und eine radiale Aufweitung der Welle 2 um 1μm statt. Dann ist

$$\Delta_{\text{Sensor }0°} = + 2\mu m - 1\,\mu m = 1\mu m$$

$$\Delta_{\text{Sensor }180°} = - 2\mu m - 1\,\mu m = -3\mu m$$

Die summierte radiale Aufweitung der Welle 2 beträgt dann

$$\Delta R_{\text{sum}} = (1\mu m - 3\mu m) / 2 = -1\,\mu m$$

Werden zusätzlich die Sensorsignale zweier um 90° versetzt zueinander liegender Sensoren 6 herangezogen und um die radiale Aufweitung $\Delta R_{\text{sum}}$ korrigiert, kann zum Beispiel eine gleichzeitig auftretende lastbedingte Verlagerung der Welle in zwei radialen Richtungen gemessen werden.

Die drei Sensoren 6 können grundsätzlich in beliebiger radialer Anordnung vorgesehen sein. Die Berechnung von $\Delta R_{\text{sum}}$ kann über trigonometrische Gleichungen, durch eine Approximation einer Kreisgleichung oder ähnlich geeignete Methoden erfolgen.

Die radiale Aufweitung der Welle 2 führt dazu, dass das auf ihr sitzende Messtarget 5 aufgrund der thermischen Erwärmung einen größeren Radius $R_2$ aufweist als in einem Zustand, bei dem die Welle nicht erwärmt ist (kalt). Der Radienunterschied zwischen warmem und kaltem Zustand ist mit $\Delta R_2$ bezeichnet.

Der Radienunterschied ergibt sich aus der Beziehung

$$\Delta R_2 = \alpha_2 \cdot R_2 \cdot \Delta T_2$$

Hierbei bedeuten

$R_2$     thermisch wirksamer Radius der Welle 2
$\alpha_2$     Temperaturausdehnungskoeffizient des Wellenmaterials
$\Delta T_2$     gemessene Temperaturänderung an der Welle 2

Somit kann die Temperaturänderung, bezogen auf den Messbeginn, berechnet werden nach

$$\Delta T_2 = \Delta R_2 / (\alpha_2 \cdot R_2)$$

Mit dem axialen Sensor 4 kann eine relative axiale Verlagerung zwischen dem Gehäuse 1 und der Welle 2 erfasst werden. Das vom Sensor 4 erzeugte Sensorsignal wird thermisch durch zwei Effekte beeinflusst. Da während des Betriebs sich sowohl das Gehäuse 1 als auch die Welle 2 beliebig komplex erwärmen, verlagern sich sowohl der Sensor 4 mit dem Gehäuse 1 als auch das Messtarget 5 mit der Welle 2 um ihre jeweils wirkenden thermischen Hebelarme.

Dies ist in Fig. 2 durch die gestrichelten Linien für das Gehäuse 1 und die Welle 2 mit dem Messtarget 5 dargestellt.

Mit dem nachfolgend beschriebenen Verfahren ist es möglich, zur Ermittlung einer geeigneten Kenngröße, zum Beispiel einer berechneten Temperatur, die axiale thermische Dehnung der rotierenden Welle 2 zwischen zwei Punkten zu identifizieren, um die an der Sensorposition erfasste gesamte axiale Verlagerung der Welle 2 um den thermischen Einfluss zu korrigieren. Grundlage für diese Kenngröße ist die messbare, summierte, thermisch bedingte radiale Aufweitung, wie $\Delta R_{sum}$.

$\Delta R_{sum}$ wird zunächst um die fliehkraftbedingte radiale Aufweitung des Messtargets 5, beispielsweise über ein Kennfeld, und um die radiale Aufweitung des Gehäuses 1 bzw. thermische Verlagerung der radialen Sensoren 6 bereinigt. Das Ergebnis ist die thermisch bedingte radiale Aufweitung $\Delta R_2$ der Welle 2.

Da bei rotierender Welle 2 in Abhängigkeit von deren Drehzahl entsprechende Fliehkräfte auftreten, wird das Messtarget 5, das auf der Welle 2 sitzt, entsprechend radial aufgeweitet. Diese radiale Aufweitung beruht nicht auf einem thermischen Einfluss. Daher muss die fliehkraftbedingte radiale Aufweitung berücksichtigt werden, wenn die relative thermische Verlagerung zwischen dem Messtarget und dem Gehäuse mit Hilfe von den radialen Sensoren 6 erfasst werden soll.

Unabhängig von den thermischen Effekten können bei der dynamischen Positionierung der Spindel trägheitsbedingte relative Verlagerungen der Welle 2 gegenüber dem Gehäuse 1 auftreten. Durch den Einsatz geeigneter Modelle und bekannten Beschleunigungsdaten können diese Verlagerungen kompensiert werden.

In den Fig. 1 und 2 ist dargestellt, dass aufgrund der radialen thermischen Aufweitung das Gehäuse 1 den Radienunterschied $\Delta R_1$ zwischen dem kalten und dem warmen Zustand aufweist, wobei der Radius auf den Befestigungspunkt des Sensors 6 bezogen ist. Die radiale Aufweitung des Gehäuses 1 aufgrund des Thermoeinflusses wird in der beschriebenen Weise durch den Temperatursensor 9 bzw. durch mehrere Temperatursensoren erfasst.

Der Radienunterschied $\Delta R_1$ des Gehäuses 1 ergibt sich aus der Beziehung

$$\Delta R_1 = \alpha_1 \cdot R_1 \cdot \Delta T_1$$

$\Delta R_1$     thermisch wirksamer Radius des Gehäuses 1
$\alpha_1$     Temperaturausdehnungskoeffizient des Gehäusematerials
$\Delta T_1$     gemessene Temperaturänderung am Gehäuse 1

Mittels der bekannten Wellentemperatur $\Delta T_2$ lässt sich die thermisch bedingte axiale Dehnung der Welle 2 berechnen:

$$\Delta L_2 = \alpha_2 \cdot L_2 \cdot \Delta T_2$$

mit

$L_2$     thermisch wirksame Länge der Welle 2
$\alpha_2$     Temperaturausdehnungskoeffizient des Wellenmaterials

Die Temperaturänderung $\Delta T_1$ des Gehäuses 1, auf deren Grundlage die axiale thermisch bedingte Dehnung $\Delta L_1$ des Gehäuses 1 berechnet werden kann, wird mit einem geeignet positionierten Temperatursensor 9 gemessen:

$$\Delta L_1 = \alpha_1 \cdot L_1 \cdot \Delta T_1$$

mit

$L_1$     thermisch wirksame Länge des Gehäuses 1
$\alpha_2$     Temperaturausdehnungskoeffizient des Gehäusematerials
$\Delta T_1$     gemessene Temperaturänderung am Gehäuse 1

Auf der Grundlage der durch die fliehkraftbedingte radiale Aufweitung bereinigten thermischen Aufweitung der Welle 2 kann die Temperatur der rotierenden Welle 2 berechnet werden.

Mittels der bekannten Wellentemperatur kann über geeignete Methoden die thermisch bedingte axiale Verlagerung des Messtargets 5 mit der Welle 2 berechnet werden.

Die axiale thermisch bedingte Verlagerung $\Delta L_2$ des Messtargets 5 und die axiale thermisch bedingte Dehnung

$\Delta L_1$ des Gehäuses 1 ist in Fig. 2 dargestellt .

Die Differenz $\Delta L_1 - \Delta L_2$ ist der thermisch bedingte Anteil der Verlagerung der rotierenden Welle 2 relativ zum Gehäuse 1.

Somit kann die thermisch bedingte radiale Aufweitung $\Delta R_2$ der rotierenden Welle 2 isoliert bestimmt werden. Auf Grundlage dieser bereinigten thermisch bedingten radialen Aufweitung der Welle 2 lässt sich dann die Temperatur der rotierenden Welle berechnen. Mit der Wellentemperatur kann über geeignete Methoden, wie beispielsweise über Thermogleichungen, die thermisch bedingte axiale Verlagerung $\Delta L_2$ des Messtargets 5 berechnet werden.

Auf die beschriebene Weise sind die thermisch bedingten axialen Dehnungen $\Delta L_1$, $\Delta L_2$ des Gehäuses 1 mit den Sensoren und des Messtargets 5 mit der Welle 2 bekannt. Die Differenz dieser beiden relativen Dehnungen $\Delta L_1$ und $\Delta L_2$ ist der thermisch bedingte Anteil der Verlagerung der rotierenden Welle 2 relativ zum Gehäuse 1, mit welchem der axiale Sensorwert von den thermischen Effekten bereinigt werden kann.

Nachfolgend wird dieses Verfahren anhand eines Ausführungsbeispiels erläutert. Dieses Ausführungsbeispiel ist nicht beschränkend zu verstehen, sondern soll lediglich die Vorgehensweise zur Bestimmung der axialen Verlagerung der rotierenden Welle relativ zu einem Gehäuse verdeutlichen.

Ausführungsbeispiel

Die vorgestellte Korrekturmethode wird anhand des folgenden Beispiels aufgezeigt, in welchem die relative axiale Verlagerung der Welle 2 (Spindelwelle in diesem Fall) und des Gehäuses 1 von dem thermischen Einfluss bereinigt wird. Dem Beispiel liegen die Messdaten einer lastfreien Rotation der Spindel 2 bei einer Drehzahl von 15.000 1/min zugrunde.

Die Berechnung erfolgt maßgebend in zwei Schritten. Erstens wird die Temperaturänderung $\Delta T_2$ der Welle 2, bezogen auf den Messbeginn, bestimmt. Anschließend wird die relative axiale Verlagerung des Messtargets $Z_{korrigiert}$ berechnet, welche um den thermischen Anteil $\Delta Z_{therm}$ bereinigt ist.

Die Berechnung der Temperaturdifferenz $\Delta T_2$ der Welle 2, bezogen auf den Messbeginn, erfolgt mittels der Beziehung

$$\Delta T_2 = \Delta R_2 \, / \, (\alpha_2 \cdot R_2)$$

Die radiale thermische Aufweitung $\Delta R_2$ der Welle 2 wird durch die Differenz aus der summierten Aufweitung $\Delta R_{sum}$ und der radialen thermischen Aufweitung $\Delta R_1$ des Gehäuses 1 berechnet:

$$\Delta R_2 = \Delta R_1 - \Delta R_{sum}$$

.

Das vereinfachte beispielhafte Vorgehen zur Messung von $\Delta R_{sum}$ wurde oben dargestellt. Bei der am Ausführungsbeispiel vorgestellten Messung wurde $\Delta R_{sum}$ durch die approximierte Umkreisgleichung berechnet.

Die radiale thermische Aufweitung $\Delta R_1$ des Gehäuses 1 wird über den linearen Zusammenhang aus Temperaturausdehnungskoeffizienten $\alpha_1$, dem effektiven Gehäuseradius $R_1$, auf dem die Sensoren befestigt sind, und der Temperaturänderung $\Delta T_1$ des Gehäuses 1 bestimmt:

$$\Delta R_1 = \alpha_1 \cdot R_1 \cdot \Delta T_1$$

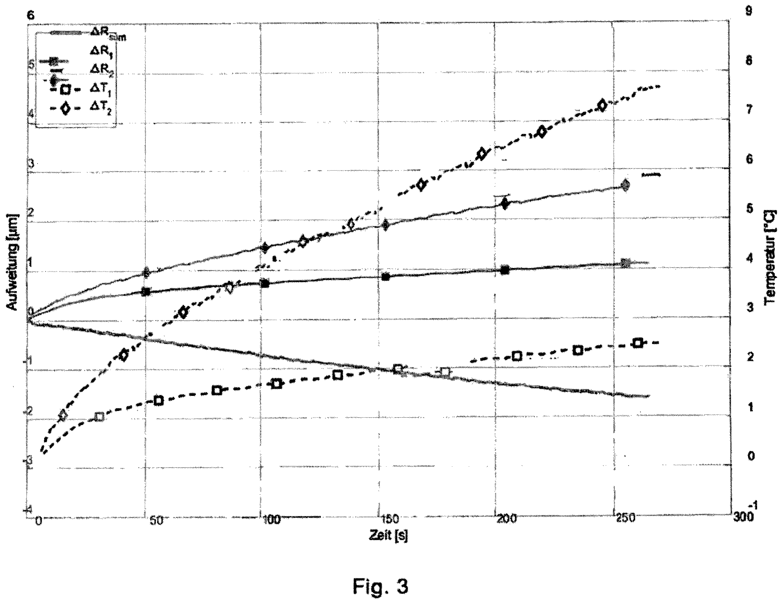

In Fig. 3 ist die gemessene Temperaturänderung $\Delta T_1$ des Gehäuses 1, die berechnete radiale Aufweitung $\Delta R_1$ des Gehäuses 1, die radiale thermische Aufweitung $\Delta R_2$ der Welle 2 und die Temperaturänderung $\Delta T_2$ der Welle 2 dargestellt.

Mittels $\Delta T_1$ und $\Delta T_2$ können die axialen thermisch bedingten Dehnungen $\Delta L_1$, $\Delta L_2$ des Gehäuses 1 und der Welle 2 berechnet werden:

$$\Delta L_1 = \alpha_1 \cdot L_1 \cdot \Delta T_1$$

$$\Delta L_2 = \alpha_2 \cdot L_2 \cdot \Delta T_2$$

mit:

L$_1$   thermisch wirksame Länge des Gehäuses 1
L$_2$   thermisch wirksame Länge der Welle 2

Die axiale thermisch bedingte Verlagerung $\Delta Z_{therm}$ wird durch die Differenz aus $\Delta L_1$ und $\Delta L_2$

$$\Delta Z_{therm} = \Delta L_1 - \Delta L_2.$$

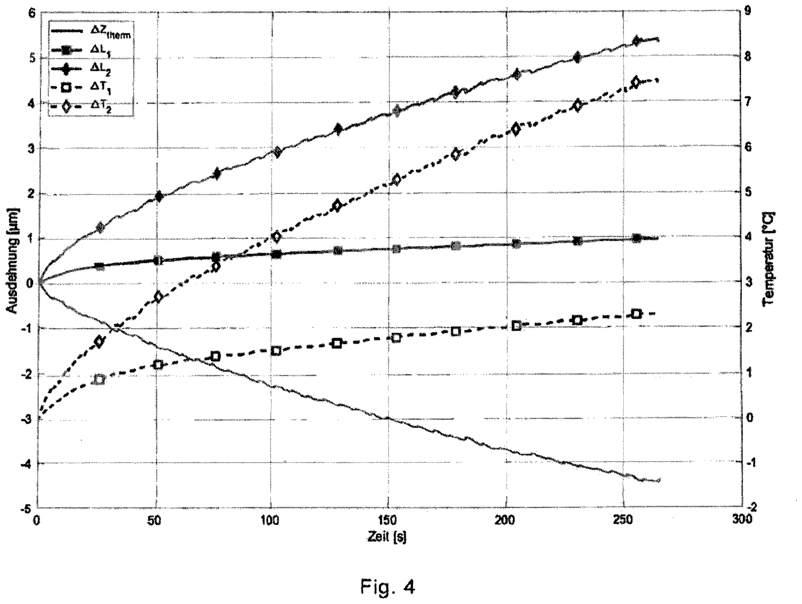

beschrieben (in Fig. 4 dargestellt).

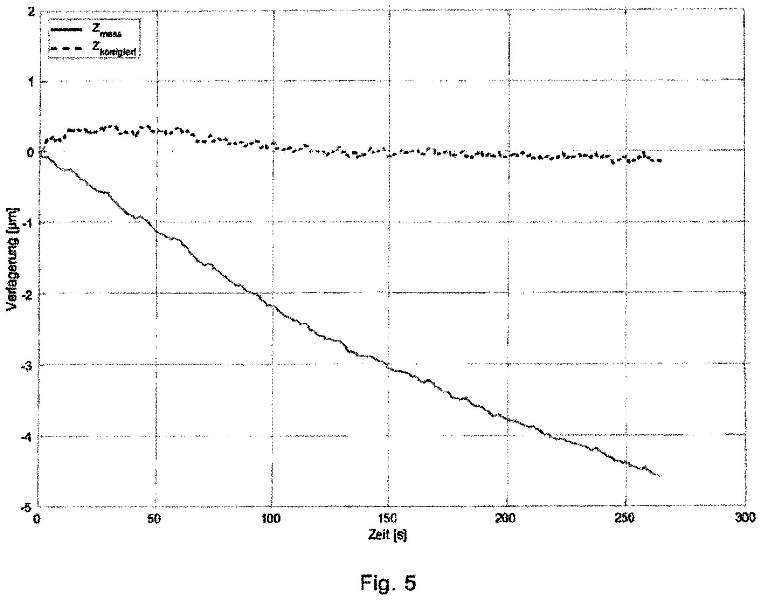

Die um die thermische Dehnung der Welle 2 und des Gehäuses 1 bereinigte relative axiale Verlagerung $Z_{korrigiert}$ wird durch die Differenz aus der gemessenen axialen Verlagerung $\Delta Z_{mess}$ und der thermisch bedingten axialen Verlagerung $\Delta Z_{therm}$ bestimmt (in Fig. 5 dargestellt):

$$Z_{korrigiert} = Z_{mess} - \Delta Z_{therm}$$

Somit kann die vom thermisch und fliehkraftbedingten Einfluss bereinigte axiale relative Verlagerung $Z_{korrigiert}$ zwischen der Spindelwelle 2 und dem Spindelgehäuse 1 für die Auswertung der axialen Belastung angewendet werden.

**Patentansprüche**

1. Verfahren zur Erfassung einer axialen Verlängerung einer rotierenden Welle (2) relativ zu einem Gehäuse (1), in dem die Welle (2) drehbar gelagert ist,
   **dadurch gekennzeichnet, dass** die axiale thermische Dehnung der Welle (2) mittels einer Kenngröße erfasst wird, dass die gesamte relative axiale Verlagerung der Welle (2) und des Gehäuses (1) mittels wenigstens eines axialen Sensors (4) erfasst wird, und dass die axiale Verlagerung der Welle (2) durch die Kenngröße korrigiert wird.

2. Verfahren nach Anspruch 1,
   **dadurch gekennzeichnet, dass** zur Bestimmung der Kenngröße die summierte thermisch bedingte radiale Aufweitung der Welle (2) und des Gehäuses (1) erfasst werden.

3. Verfahren nach Anspruch 1 oder 2,
   **dadurch gekennzeichnet, dass** die summierte thermisch bedingte radiale Aufweitung nach der Beziehung

$$\Delta R_{sum} = (\Delta_{Sensor\ 0°} + \Delta_{Sensor\ 180°})/2$$

bestimmt wird, wobei $\Delta R_{sum}$ die relative radiale Aufweitung zwischen der Welle (2) und dem Gehäuse (1), $\Delta_{Sernsor\ 0°}$ den Messwert bei 0° radialem Winkel und $\Delta_{Sensor\ 180°}$ den Messwert bei 180° radialem Winkel beschreibt.

4. Verfahren nach Anspruch 3,
   **dadurch gekennzeichnet, dass** zur Erfassung der radialen Aufweitung des Gehäuses (1) bei ungleichförmiger Temperaturverteilung mehrere Sensoren (9) eingesetzt werden, wobei die Temperatur an jedem Sensor (9) gemessen und die radiale Aufweitung des Gehäuses (1) an jedem Sensor (9) berücksichtigt wird.

5. Verfahren nach Anspruch 3 oder 4,
   **dadurch gekennzeichnet, dass** der Wert ($\Delta R_{sum}$) um eine fliehkraftbedingte radiale Aufweitung eines auf der Welle (2) drehfest und axial unverschieblich vorgesehenen Messtargets (5) bereinigt wird.

6. Verfahren nach einem der Ansprüche 1 bis 5,
   **dadurch gekennzeichnet, dass** der Wert ($\Delta R_{sum}$) um eine thermisch bedingte radiale Aufweitung des Gehäuses (1) bereinigt wird.

7. Verfahren nach einem der Ansprüche 1 bis 6,
   **dadurch gekennzeichnet, dass** zur Berechnung der thermisch bedingten radialen Aufweitung des Gehäuses (1) Temperatursensoren (9) herangezogen werden.

8. Verfahren nach einem der Ansprüche 1 bis 7,
**dadurch gekennzeichnet, dass** auf der Grundlage der thermisch bedingten, um die fliehkraftbedingte radiale Aufweitung der Welle (2) und um die thermisch bedingte radiale Aufweitung des Gehäuses (1) bereinigten radialen Aufweitung der Welle (2) die Temperatur der Welle (2) berechnet wird.

9. Verfahren nach einem der Ansprüche 1 bis 8,
**dadurch gekennzeichnet, dass** auf der Grundlage der Temperatur der Welle (2) die thermisch bedingte axiale Dehnung der Welle (2) bestimmt wird.

10. Verfahren nach einem der Ansprüche 1 bis 9,
**dadurch gekennzeichnet, dass** zur Bestimmung der thermisch bedingten axialen Verlagerung der Welle (2) wenigstens ein axialer Sensor (4), der am Gehäuse (1) vorgesehen ist, und wenigstens ein dem axialen Sensor (4) mit axialem Abstand gegenüberliegendes, fest mit der Welle (2) verbundenes Messtarget (5) eingesetzt werden.

**Claims**

1. A method for detecting an axial elongation of a rotating shaft (2) relative to a housing (1), in which the shaft (2) is rotatably mounted, **characterised in that** the axial thermal elongation of the shaft (2) is detected by means of a parameter, **in that** the entire relative axial displacement of the shaft (2) and of the housing (1) is detected by means of at least one axial sensor (4), and **in that** the axial displacement of the shaft (2) is corrected by the parameter.

2. The method according to Claim 1, **characterised in that** for determining the parameter the totalled thermally induced radial expansion of the shaft (2) and of the housing (1) are detected.

3. The method according to Claim 1 or 2, **characterised in that** the totalled thermally induced radial expansion is determined according to the relationship

$$\Delta Rsum = (\Delta Sensor\ 0° + \Delta Sensor\ 180°)/2$$

wherein $\Delta Rsum$ describes the relative radial expansion between the shaft (2) and the housing (1), $\Delta Sensor\ 0°$ the measured value at 0° of radial angle and $\Delta Sensor\ 180°$ the measured value at 180° radial angle.

4. The method according to Claim 3, **characterised in that** for detecting the radial expansion of the housing (1) with uneven temperature distribution multiple sensors (9) are employed, wherein the temperature is measured on each sensor (9) and the radial expansion of the housing (1) on each sensor (9) is taken into account.

5. The method according to Claim 3 or 4, **characterised in that** the value ($\Delta Rsum$) is adjusted by a centrifugal force-induced radial expansion of a measurement target (5) that is non-rotatably and axially non-displaceably provided on the shaft (2).

6. The method according to any one of the Claims 1 to 5, **characterised in that** the value ($\Delta Rsum$) is adjusted by a thermally induced radial expansion of the housing (1).

7. The method according to any one of the Claims 1 to 6, **characterised in that** for calculating the thermally induced radial expansion of the housing (1) temperature sensors (9) are utilised.

8. The method according to any one of the Claims 1 to 7, **characterised in that** on the basis of the thermally induced radial expansion of the shaft (2) adjusted by the centrifugal force-induced radial expansion of the shaft (2) and by the thermally induced radial expansion of the shaft (1), the temperature of the shaft (2) is calculated.

9. The method according to any one of the Claims 1 to 8, **characterised in that** on the basis of the temperature of the shaft (2) the thermally induced axial elongation of the shaft (2) is determined.

10. The method according to any one of the Claims 1 to 9, **characterised in that** for determining the thermally induced axial displacement of the shaft (2) at least one axial sensor (4), which is provided on the housing (1), and at least one measurement target (5), located axially spaced apart opposite the axial sensor (4) and which is firmly connected to the shaft (2), is employed.

**Revendications**

1. Procédé, destiné à détecter une élongation axiale d'un arbre (2) en rotation par rapport à un carter (1), dans lequel l'arbre (2) est logé de manière rotative, **caractérisé en ce que** l'on détecte la dilatation thermique axiale de l'arbre (2) au moyen d'une grandeur caractéristique, **en ce que** l'on détecte le déplacement axial relatif de l'arbre (2) et du carter (1) au moyen d'au moins un capteur (4) axial et **en ce que** l'on corrige le déplacement axial de l'arbre (2) par la grandeur caractéristique.

2. Procédé selon la revendication 1, **caractérisé en ce que** pour déterminer la grandeur caractéristique, l'on détecte l'expansion radiale de l'arbre (2) et du carter (1) totalisées dues à des effets thermiques.

3. Procédé selon la revendication 1 ou 2, **caractérisé en ce que** l'on détermine l'expansion radiale totalisée due à des effets thermique selon l'équation

$$\Delta Rsum = (\Delta capteur\ 0° + \ \Delta capteur\ 180°)\ /\ 2$$

Δ**Rsum** décrivant l'expansion radiale entre l'arbre (2) et le carter (1), Δ**capteur**0° décrivant la valeur mesurée à un angle radial de 0° et Δ**capteur**180° décrivant la valeur mesurée à un angle radial de 180°).

4. Procédé selon la revendication 3, **caractérisé en ce que** pour détecter l'expansion radiale du carter (1) lors d'une répartition non uniforme de la température, l'on met en oeuvre plusieurs capteurs (9), la température étant mesurée sur chaque capteur (9) et l'expansion radiale du carter (1) étant prise en compte sur chaque capteur (9).

5. Procédé selon la revendication 3 ou 4, **caractérisé en ce que** l'on rectifie la valeur (Δ**Rsum**) de la valeur d'une expansion radiale due à la force centrifuge d'une cible de mesure (5) prévue de manière solidaire en rotation et axialement indéplaçable sur l'arbre (2).

6. Procédé selon l'une quelconque des revendications 1 à 5, **caractérisé en ce que** l'on rectifie la valeur (Δ**Rsum**) de la valeur d'une expansion radiale due à des effets thermiques du carter (1).

7. Procédé selon l'une quelconque des revendications 1 à 6, **caractérisé en ce que** pour calculer l'expansion radiale due des effets thermiques du carter (1), l'on a recours à des capteurs de température (9).

8. Procédé selon l'une quelconque des revendications 1 à 7, **caractérisé en ce que** l'on calcule la température de l'arbre (2) sur la base de l'expansion radiale de l'arbre (2) due à des effets thermiques rectifiée de la valeur de l'expansion radiale due à la force centrifuge et de l'expansion radiale de l'arbre (2) rectifiée de la valeur de l'expansion radiale due à des effets thermiques du carter (1).

9. Procédé selon l'une quelconque des revendications 1 à 8, **caractérisé en ce que** sur la base de la température de l'arbre (2), l'on détermine la dilatation de l'arbre (2) due à des effets thermiques.

10. Procédé selon l'une quelconque des revendications 1 à 9, **caractérisé en ce que** pour déterminer le déplacement axial de l'arbre (2) dû à des effets thermiques, l'on met en oeuvre au moins un capteur (4) axial qui est prévu sur le carter (1) et au moins une cible de mesure (5) placée au vis-à-vis du capteur (4) axial avec un écart axial, fixement reliée avec l'arbre (2).

Fig. 1

Fig. 2

Fig. 3

Fig. 4

Fig. 5

EP 4 062 124 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006316959 A
- JP 2001269828 A
- US 2009009018 A
- DE 10329590